# EUROPEAN PATENT SPECIFICATION

(11) **EP 3 839 311 B1**
(45) Date of publication and mention of the grant of the patent: **24.04.2024**
(21) Application number: 19218594.0
(22) Date of filing: 20.12.2019
(51) Int. Cl.: F16L 1/12

(54) **MECHANICAL PROTECTION OF SUBSEA PIPES**
MECHANISCHER SCHUTZ VON UNTERWASSERROHREN
PROTECTION MÉCANIQUE DE TUYAUX SOUS-MARINS

(43) Date of publication of application: 23.06.2021
(73) Proprietor: TechnipFMC Subsea France, 92400 Courbevoie (FR)
(72) Inventor: MACONOCHIE, Alasdair, Inverurie, Aberdeenshire AB51 0LY (GB); BOKHORST, Rick, 0375 Oslo (NO); RIVIERE, Nicolas, 0187 Oslo (NO)
(74) Representative: Murgitroyd & Company

(56) References cited:
- WO-A1-2014/098576
- CN-A- 104 988 926
- GB-A- 2 004 817
- US-A- 4 352 590
- US-A1- 2004 141 811
- MASARU SEKI ET AL: "New Fall Pipe Rock Dumping System for protection of submarine cables", OCEANS, 2012 - YEOSU, IEEE, 21 May 2012 (2012-05-21), pages 1-6, XP032219326, DOI: 10.1109/OCEANS-YEOSU.2012.6263379 ISBN: 978-1-4577-2089-5

## Description

This invention relates to a rock berm for use as a protective cover for subsea pipelines, in particular subsea pipelines used to transport fluid. The invention also relates to a method of making the rock berm.

### Background

In certain situations, subsea pipelines may need to be laid in relatively shallow water. In the context of the invention, the term "relatively shallow water" is used to mean water depths of up to 1300 metres.

In this context, the subsea pipeline may be a rigid pipe, a flexible pipe or an umbilical. Rigid and flexible pipes are used for the transport of oil and/or gas and/or water from a subsea structure to a surface installation. Umbilicals are used for the transport of hydraulic fluids, electrical power, gas and/or chemicals from a surface installation to a subsea structure. The subsea structure may be a wellhead, a manifold or a Christmas tree. The surface installation may be a vessel such as a FPSO (Floating Production Storage and Offloading) or a platform such as a TLP (Tension Leg Platform).

As a result of the subsea pipeline being in relatively shallow water, and therefore being close to the surface, the subsea pipeline is at higher risk of being subjected to damage than subsea pipelines laid in deeper water. This damage can be caused by fishing vessels that operate close to the subsea pipeline. In addition, extreme storm conditions can move the pipeline which may result in damage, in particular in relatively shallow water. Movement of the subsea pipeline (lateral buckling for example) may result in the failure of the pipeline. Dropped objects from a laying vessel may also cause damage to the subsea pipeline. Thus, there is a need to protect the subsea pipeline to maintain its integrity during its service life.

One way of protecting the subsea pipeline from the damage mentioned above is to form a berm of rock fragments which covers the pipeline once it has been laid on the seabed. The rock berm thus produced is an elongate element which has a major axis along the length of the subsea pipeline, covering some or all of the pipeline along sections in relatively shallow water which are at risk of damage.

The rock fragments can be stored on the deck of a service vessel. The service vessel may then be moved until it is located above the subsea pipeline to be protected. A tremie located on the deck of the service vessel may then be fed with rock fragments. The rock fragments are then distributed through a fall pipe which may be launched through the moonpool or the side of the service vessel. The rock fragments then flow through the fall pipe and onto the top of the subsea pipeline. The vessel can then be moved to cover most or all of the length of the subsea pipeline. Several passes are required in order for level of rock fragments to reach the height and width necessary to provide adequate mechanical protection to the integrity of the subsea pipeline. The formation that results is referred to as a berm, or a rock berm.

The above method is time consuming and therefore costly because a high quantity of rock is required to protect the subsea pipeline. In addition, it is necessary for the service vessel to be used for an extended period of time due to the large quantity of rock that needs to be deposited. This also increases costs and environmental impact.

Thus, there is a need for mechanical protection of subsea pipelines which is both easy to install and economical.

M. Seki et al., 2012 Oceans - Yeosu, 2012, DOI: 10.1109/OCEANS-Yeosu.2012.6263379 discloses a "Fall Pipe rock Dumping System" for protecting submarine cables.

### Statement of Invention

According to a first aspect of the invention, there is provided a rock berm for use as a protective cover for subsea pipelines laid on a sea bed, wherein the rock berm has a cross-section comprising:
(a) a base,
(b) two side walls which each extend at their lower end from the base towards each other at their upper end, and
(c) a top which links the upper ends of the two side walls,

Wherein the two side walls have a slope of 1:1.75-1:1.25; and
wherein the top has a width of 0.15-0.35 metres and the base has a width of 3.5-5 metres.

The rock berm of the invention can provide similar, or even enhanced, protection of a subsea pipeline compared to known rock berms. However, the invention can allow this to be achieved with a reduction of up to 23 % by weight in the quantity of rock required to form the berm. In addition, the rock berm of the invention can have a positive environmental impact because the reduced quantity of rock allows installation to be achieved more quickly, meaning that fewer vessel days are required. The rock berm of the invention is also easy to maintain because the maintenance work required is similar to that for prior rock berms.

According to a second aspect of the invention, there is provided a method of making such a rock berm for protecting subsea pipelines, the method comprising the steps of:
(a) depositing rocks on the subsea pipeline in order to form the rock berm.

In the context of the invention, the term "width" is used to refer to the direction perpendicular to the major axis of the rock berm (and thus the pipeline), and substantially parallel to the sea bed.

### Brief description of the drawings

This invention will be further described by reference to the following Figures which are not intended to limit the scope of the invention claimed, in which:
**Figure 1** shows a cross-section of a rock berm according to the prior art,
**Figure 2** shows how the rock berm of Figure 1 is built up over three passes,
**Figure 3** shows a cross-section of a rock berm according to one embodiment of the invention, and
**Figure 4** shows a Fall Pipe Vessel (FPV) used to form a rock berm according to the invention.

### Detailed description

In use (i.e. when the rock berm is installed on the sea bed), the base may sit on the sea bed such that the rock berm substantially covers the subsea pipeline. In particular, the two side walls may extend from opposite edges of the base.

More particularly, the top may be substantially parallel to the base. More particularly, the top may have a width of 0.20-0.30 metres, more particularly about 0.25 metres. The base has a width of 3.5-5 metres, optionally 4-4.5 metres.

The two side walls have a slope of 1:1.75-1:2.25, more preferably about 1:2.

More particularly, the cross-section of the rock berm may be substantially trapezoid in shape. Even more particularly, the cross-section of the rock berm may substantially be the shape of an isosceles trapezoid. In the context of the invention, this cross-section refers to that in a direction perpendicular to the major axis of the rock berm (and thus the subsea pipeline).

In particular, the rocks forming the rock berm may have a mean particle size of 1-200 mm, more particularly 50-150 mm, even more particularly 20-130 mm.

More particularly, the subsea pipeline may be a rigid pipe, a flexible pipe, or an umbilical.

A rigid pipe is usually made from a metallic material such as a carbon steel or a corrosion resistant alloy. The rigid pipe may be internally lined with a corrosion resistant cladding or a plastic liner. An external corrosion layer may be added to the rigid pipe for external corrosion protection and thermal insulation. The rigid pipe may comprise an external outer pipe for improved thermal insulation.

A flexible pipe usually comprises a plurality of metallic and polymeric concentric layers. The flexible pipe generally comprises an internal polymeric pressure sheath for the transport of a fluid, the internal sheath being surrounded by a metallic pressure vault and metallic tensile armor layers. An outer sheath may be placed around the tensile armor layers to protect the flexible pipe from water ingress. The flexible pipe may be bonded or unbonded. An internal carcass may be located in the pressure sheath. The flexible pipe may, for example, be as described in API17J and API17B published from the American Petroleum Institute.

Flexible and rigid pipes are typically used for transporting a fluid such as oil, gas, water from a subsea installation to a surface installation or between two subsea installations.

An umbilical generally comprises a bundle of electrical cables and steel tubes. The bundle is usually over-sheathed and optionally armored. Umbilicals are typically used for transmitting power, signals and fluids, such as fluid injection, to a subsea installation.

The rock berm extends on the sea bed. It may be at a depth up to 1300 m. In particular, the rock berm may be at a depth of less than 150 metres below sea level.

In relation to the method of making a rock berm, in the step of depositing rocks on the subsea pipeline the rocks may be deposited in a single step. In particular, the step of depositing rocks may be carried out using a Fall Pipe Vessel (FPV).

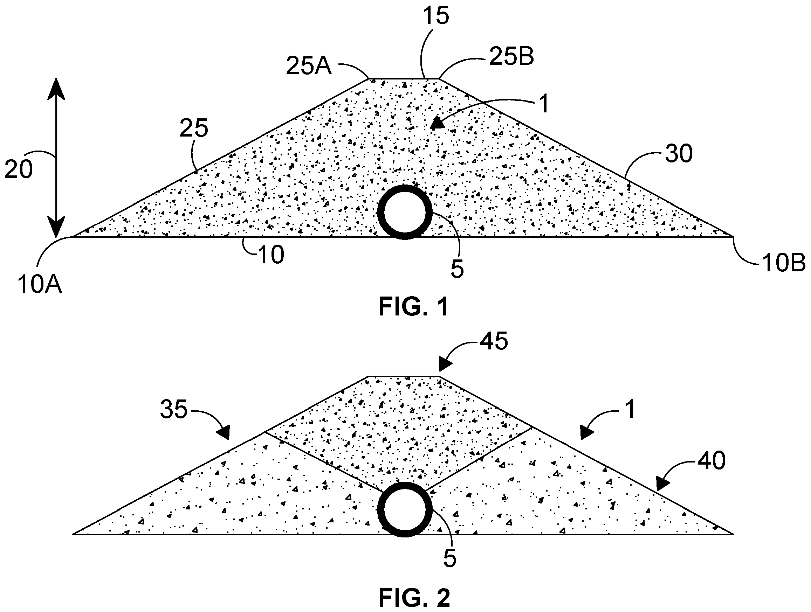

Figure 1 shows a cross-section of a rock berm 1 (not to scale) according to the prior art. Rock berm 1 is used to cover and protect subsea pipeline 5, whilst optionally also providing thermal insulation to the subsea pipeline 1. The cross-section shown in Figure 1 is perpendicular to and looking through the major axis of the subsea pipeline 5, and thus that of the rock berm 1.

In terms of its shape, rock berm 1 has a cross-section which is approximately in the form of an isosceles trapezoid, i.e. a trapezoid in which the two internal angles adjacent to the base are approximately the same. In Figure 1, the base 10 of the rock berm 1, i.e. the part that is in contact with the sea bed (not shown), is 7 metres wide. Extending from the opposite ends 10A, 10B of base 10 are side walls 25, 30. Side walls 25, 30 extend from the lower ends at opposite ends 10A, 10B of base 10 in a direction away from the base 10 and the sea bed, but towards each other. At their upper ends 25A, 30A, the side walls 25, 30 connect to the top 15 of the rock berm 1, i.e. the uppermost part. The top 15 is 1 metre wide. The height 20 of the rock berm 1 is 1 metre. Thus, the slope of the side walls 25, 30 of the rock berm 1 is 1:3, i.e. a change in vertical height of 1 metre for 3 metres moved in a horizontal direction.

Figure 2 is a further view of the prior art rock berm 1 of Figure 1, showing how the rock berm is formed using three passes of a service vessel (not shown) depositing rocks onto the sea bed. A first pass of the vessel is used to form left-hand triangular formation 35. A second pass of the vessel is then used to form right-hand triangular formation 40. Finally, a third pass of the vessel is used to form central formation 45, thereby providing the approximately isosceles trapezoid shape of rock berm 1.

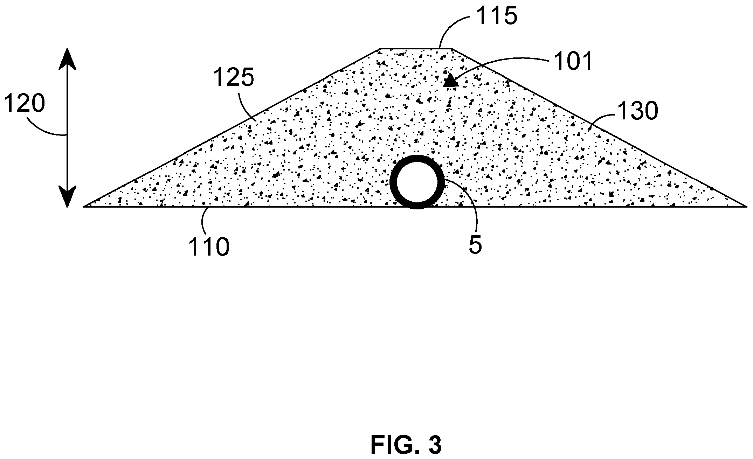

Figure 3 shows a rock berm 101 according to the invention. Rock berm 101 has been formed by depositing rocks onto pipeline 5 in a single step as opposed to the three-step method of the prior art rock berm 1 of Figures 1 and 2.

Similar to rock berm 1, rock berm 101 is also approximately in the form of an isosceles trapezoid. Thus, rock berm 101 has the same features as rock berm 1, except for the differences described as follows. In particular, the dimensions of rock berm 101 are slightly different to those of prior art rock berm 1. In Figure 3, the base 110 of the rock berm 101 is 4.25 metres wide. The top 115 of the rock berm 101 is 0.25 metres wide. The height 120 of the rock berm 1 is 1 metre. The slope of the sides 125, 130 of the rock berm 101 is 1:2, i.e. a change in vertical height of 1 metre for 2 metres moved in a horizontal direction. Thus, compared to prior art rock berm 1, the rock berm 101 of the invention has a significantly narrower top 115, a narrower base 110 and steeper sides 125, 130.

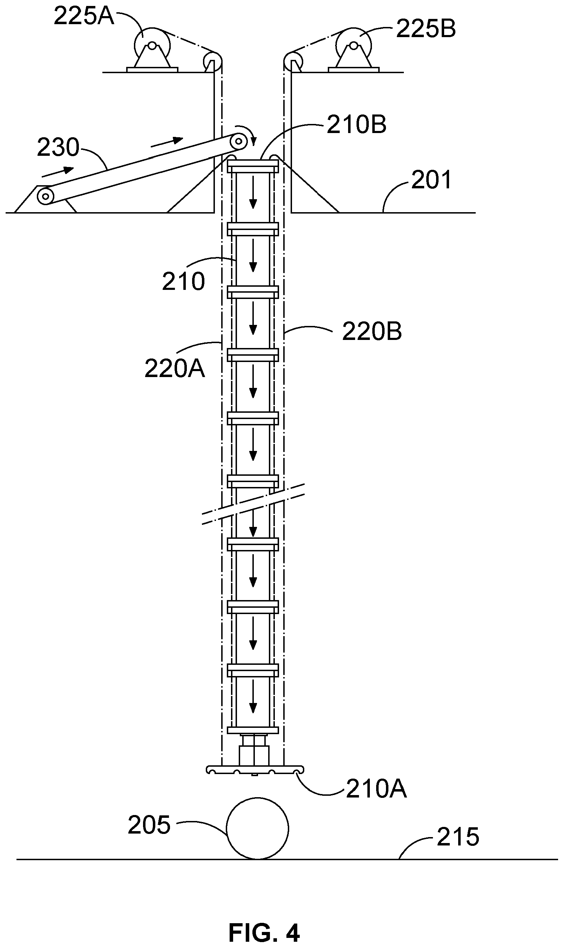

Figure 4 shows a Fall Pipe Vessel (FPV) 201 used to form rock berm 101, i.e. rock berm 101 is formed using a fall pipe method. s

As shown in Figure 4, fall pipe 210 extends downwards from FPV 201 towards sea bed 215. The fall pipe 210 has a lower end 210A which is inserted into the sea during use, and an upper end 210B which is retained within the FPV 201.

Subsea pipeline 205 has previously been laid on sea bed 215, and is viewed in Figure 4 looking through its major axis. The FPV 201 is positioned such that the lower end 210A of fall pipe 210 is 4-6 metres above subsea pipeline 205.

The lateral position of fall pipe 210 is maintained above the subsea pipeline 205 using a vessel dynamic positioning system (not shown) and a Remotely Operated underwater Vehicle (ROV) system (also not shown) positioned near the lower end 210A of the fall pipe 210.

Cables 220A, 220B extend from winches 225A, 225B which are provided on the FPV 201. These cables 220A, 220B are attached to and extend downwardly along the fall pipe 210 to its lower end 210A. The raising and lower of cables 220A, 220B using winches 225A, 225B controls the vertical position of the lower end 210A of fall pipe 210.

FPV 201 is provided with a rock storage area (not shown) in which the rock fragments used to form rock berm 101 are kept. FPV 201 also has a conveyor 230 for transporting these rock fragments from the rock storage area to upper end 210B of the fall pipe 210. The rocks them travel down fall pipe 210, exiting at its lower end 210A and covering subsea pipeline 205 to form rock berm 101. The height of rock berm 101 is ensured and controlled by the volume of rock deployed from FPV 101 through conveyor 230, as well as by the speed that FPV 201 moves along the major axis of subsea pipeline 205.

In an alternative embodiment, a SDV (side dump vessel, not shown) can be used for water depths of 5-30 metres.

## Claims

1. A rock berm (101) for use as a protective cover for subsea pipelines (5) laid on a sea bed, wherein the rock berm comprises:
(a) a base (110),
(b) two side walls (125, 130) which extend at their lower end from the base (110) towards each other, and
(c) a top (115) which links the upper ends of the two side walls,
wherein the two side walls (125, 130) have a slope of 1:1.75 - 1:2.25; and **characterized in that** the top (115) has a width of 0.15-0.35 metres and the base (110) has a width of 3.5-5 metres.

2. A rock berm (101) as claimed in claim 1, wherein the top (115) is substantially parallel to the base (110).

3. A rock berm (101) as claimed in any one of the preceding claims, wherein the rock berm (101) is substantially trapezoid in shape.

4. A method of making a rock berm (101) as claimed in any one of the preceding claims, the method comprising the step of:
(a) depositing rocks on the subsea pipeline in order to form a rock berm (101) comprising the features of any one of claims 1 to 3.

5. A method as claimed in claim 4, wherein in the step of depositing rocks on the subsea pipeline the rocks are deposited in a single step.

6. A method as claimed in either claim 4 or claim 5, wherein the step of depositing rocks is carried out using a Fall Pipe Vessel (201).

## Patentansprüche

1. Eine Steinberme (101) zur Verwendung als eine Schutzabdeckung für Untermeeresrohrleitungen (5), die auf einem Meeresboden verlegt sind, wobei die Steinberme Folgendes beinhaltet:
(a) eine Basis (110);
(b) zwei Seitenwände (125, 130), die sich an ihrem unteren Ende von der Basis (110) zueinander erstrecken, und
(c) ein Oberteil (115), das die oberen Enden der zwei Seitenwände verknüpft, wobei die zwei Seitenwände (125, 130) eine Neigung von 1 : 1,75-1 : 2,25 aufweisen;
und
**dadurch gekennzeichnet, dass** das Oberteil (115) eine Breite von 0,15-0,35 Metern aufweist und die Basis (110) eine Breite von 3,5-5 Metern aufweist.

2. Steinberme (101) gemäß Anspruch 1, wobei das Oberteil (115) im Wesentlichen parallel zu der Basis (110) ist.

3. Steinberme (101) gemäß einem der vorhergehenden Ansprüche, wobei die Steinberme (101) in der Form im Wesentlichen trapezoidförmig ist.

4. Ein Verfahren zum Fertigen einer Steinberme (101) gemäß einem der vorhergehenden Ansprüche, wobei das Verfahren den folgenden Schritt beinhaltet:
(a) Ablagern von Gestein auf der Untermeeresrohrleitung, um eine Steinberme (101) zu bilden, die die Merkmale gemäß einem der Ansprüche 1 bis 3 beinhaltet.

5. Verfahren gemäß Anspruch 4, wobei bei dem Schritt des Ablagerns von Gestein auf der Untermeeresrohrleitung das Gestein in einem einzelnen Schritt abgelagert wird.

6. Verfahren gemäß Anspruch 4 oder Anspruch 5, wobei der Schritt des Ablagerns von Gestein unter Verwendung eines Fallrohr-Seefahrzeugs (201) ausgeführt wird.

## Revendications

1. Un talus de roches (101) destiné à être utilisé en tant que couverture protectrice pour des pipelines sous-marins (5) posés sur un fond marin, le talus de roches comprenant :
(a) une base (110),
(b) deux parois latérales (125, 130) qui s'étendent à leur extrémité inférieure depuis la base (110) l'une vers l'autre, et
(c) un sommet (115) qui relie les extrémités supérieures des deux parois latérales, où les deux parois latérales (125, 130) présentent une pente de 1/1,75 à 1/2,25 ; et **caractérisé en ce que** le sommet (115) présente une largeur de 0,15 à 0,35 mètres et la base (110) présente une largeur de 3,5 à 5 mètres.

2. Un talus de roches (101) tel que revendiqué dans la revendication 1, où le sommet (115) est substantiellement parallèle à la base (110).

3. Un talus de roches (101) tel que revendiqué dans l'une quelconque des revendications précédentes, le talus de roches (101) étant de configuration substantiellement trapézoïdale.

4. Un procédé de réalisation d'un talus de roches (101) tel que revendiqué dans l'une quelconque des revendications précédentes, le procédé comprenant l'étape consistant à :
(a) déposer des roches sur le pipeline sous-marin afin de former un talus de roches (101) comprenant les caractéristiques de l'une quelconque des revendications 1 à 3.

5. Un procédé tel que revendiqué dans la revendication 4, où dans l'étape consistant à déposer des roches sur le pipeline sous-marin, les roches sont déposées en une seule étape.

6. Un procédé tel que revendiqué dans soit la revendication 4, soit la revendication 5, où l'étape consistant à déposer des roches est effectuée à l'aide d'un navire à tuyau de chute (201).
